# EUROPEAN PATENT SPECIFICATION

(11) **EP 2 003 309 B1**
(45) Date of publication and mention of the grant of the patent: **13.03.2019**
(21) Application number: 08252040.4
(22) Date of filing: 13.06.2008
(51) Int. Cl.: F02C 7/042, F02C 7/045, F02K 3/06

(54) **Variable geometry nacelle with nanoelectromechanical system for an aircraft engine and corresponding operating method**
Gondel mit veränderlicher Geometrie mit nanoelektromechanischem System für ein Flugzeugtriebwerk und enstprechendes Betriebsverfahren
Nacelle à géométrie variable avec système nanoélectromécanique pour moteur d'avion et procédé d'exploitation associé

(30) Priority: 13.06.2007 US 762088
(43) Date of publication of application: 17.12.2008
(73) Proprietor: United Technologies Corporation, Farmington, CT 06032 (US)
(72) Inventor: Jain, Ashok K., Tempe, AZ 85283 (US)
(74) Representative: Dehns

(56) References cited:
- EP-A2- 1 607 603
- US-A- 5 931 422
- US-A- 6 089 505
- US-A1- 2005 150 280
- US-B1- 6 588 709
- US-B2- 6 882 051
- PITT D M ET AL: "SAMPSON SMART INLET DESIGN OVERVIEW AND WIND TUNNEL TEST PART I-DESIGN OVERVIEW", PROCEEDINGS OF SPIE, THE INTERNATIONAL SOCIETY FOR OPTICAL ENGINEERING SPIE, USA, vol. 4698, 18 March 2002 (2002-03-18), pages 13-23, XP008019302, ISSN: 0277-786X, DOI: 10.1117/12.475064

## Description

### BACKGROUND OF THE INVENTION

This invention generally relates to a gas turbine engine, and more particularly to a nacelle assembly for a turbofan gas turbine engine.

In an aircraft gas turbine engine, such as a turbofan engine, air is pressurized in a compressor and mixed with fuel in a combustor for generating hot combustion gases. The hot combustion gases flow downstream through turbine stages which extract energy from the hot combustion gases.

Combustion gases are discharged from the turbofan engine through a core exhaust nozzle while fan air is discharged through an annular fan exhaust nozzle defined at least partially by a nacelle assembly which surrounds the core engine. A majority of propulsion thrust is provided by the pressurized fan air which is discharged through the fan exhaust nozzle, while the remaining thrust is provided from the combustion gases discharged through the core exhaust nozzle.

The fan section of the turbofan engine may be geared to control a tip speed of the fan section. Reduced fan section tip speed results in decreased noise because the fan section tip speed is lower in speed than the speed of the rotating compressor. Also, controlling the fan section tip speed allows the fan section to be of a larger diameter, which further decreases noise generation.

The performance of turbofan engines varies relative to flight conditions experienced by the aircraft. A conventional inlet lip section located at a forward most section of the nacelle assembly is a compromise design which generally reduces airflow separation from the inlet lip section of the nacelle assembly during these flight conditions. Although effective, a compromised "thick" inlet lip section designed for a takeoff flight condition may operate at a somewhat reduced efficiency in another flight condition, such as a cruise condition which may be better served by a "thin" inlet lip section. Furthermore, a "thick" inlet lip section may, during some flight conditions, suffer from boundary layer separation that may decrease efficiency.

Small vortex generators which increase the velocity gradient of oncoming airflow near the effective boundary layer and synthetic jets which introduce airflow at the boundary layer have been conventionally utilized to reduce the onset of boundary layer separation from the nacelle assembly. These attempts, however, have proved complex, expensive and may not fully reduce the onset of boundary layer separation.

Accordingly, it is desirable to provide a turbofan gas turbine engine fan nacelle assembly which is aerodynamically optimized for particular flight conditions.

US 6,089,505 discloses a prior art nacelle assembly according to the preamble of claim 1 and a method according to the preamble of claim 13.

### SUMMARY OF THE INVENTION

There is provided, according to the present invention, a nacelle assembly as claimed in claim 1, a gas turbine engine as claimed in claim 7 and a method as claimed in claim 13.

The flexible portion may be selectively movable to influence an effective boundary layer thickness of the nacelle assembly. A controller may identify an operability condition and selectively flex the cowl section in response to the operability condition. The flexible portion may be selectively driven by the nanoelectromechanical system

According to a preferred embodiment, there is provided a method of an effective boundary layer thickness management of an inlet lip or cowl section of a nacelle of a gas turbine engine, to minimize flow separation, including sensing an operability condition, and selectively flexing at least a portion of a cowl section positioned downstream of the inlet lip section in response to sensing the operability condition.

Accordingly, the present invention provides a turbofan gas turbine engine fan nacelle assembly which is aerodynamically optimized for particular flight conditions.

### BRIEF DESCRIPTION OF THE DRAWINGS

The various features and advantages of this invention will become apparent to those skilled in the art from the following detailed description. The drawings that accompany the detailed description can be briefly described as follows.
Figure 1 illustrates a general perspective view of a gas turbine engine;
Figure 2 illustrates a nacelle assembly of the gas turbine engine illustrated in Figure 1;
Figure 3 illustrates a flexible cowl section of the nacelle assembly of the gas turbine engine shown in Figure 1;
Figure 4 illustrates a front view of the nacelle assembly;
Figure 5 illustrates various flight conditions experienced by a nacelle assembly;
Figure 6A illustrates a sectional view of a flexible portion of a nacelle assembly in a compressed condition;
Figure 6B illustrates a sectional view of a flexible portion of a nacelle assembly in a expanded condition;
Figure 7A illustrates a sectional view of the flexible portion in a constant thickness expanded condition; and
Figure 7B illustrates a sectional view of the flexible portion in a partially expanded condition illustrated as an airfoil shape.

### DETAILED DESCRIPTION OF THE DISCLOSED EMBODIMENT

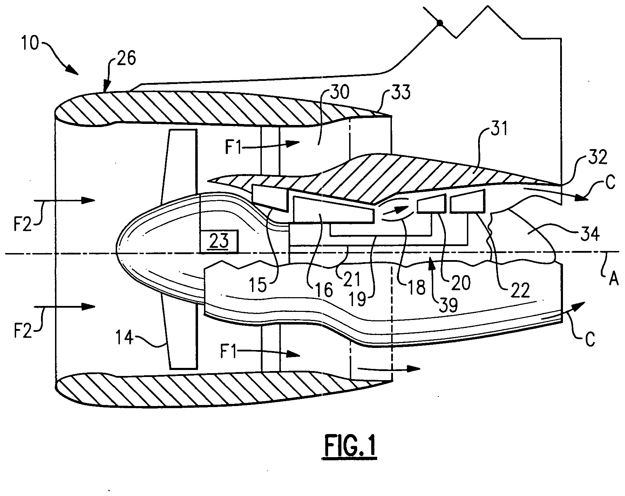

Figure 1 illustrates a gas turbine engine 10 which includes a fan section 14, a low pressure compressor 15, a high pressure compressor 16, a combustor 18, a high pressure turbine 20, and a low pressure turbine 22. During operation, air is pressurized in the compressors 15, 16 and mixed with fuel in the combustor 18 to generate hot combustion gases. During operation, air enters the fan section 14, is pressurized by the compressors 15, 16, and is mixed with fuel and burned in a combustor 18. Hot combustion gases generated within the combustor 18 flow through the high and low pressure turbines 20, 22, which extract energy from the hot combustion gases.

In a two-spool design, the high pressure turbine 20 utilizes the extracted energy from the hot combustion gases to power the high pressure compressor 16 through a high speed shaft 19, and a low pressure turbine 22 utilizes the energy extracted from the hot combustion gases to power the low pressure compressor 15 and the fan section 14 through a low speed shaft 21. However, the invention is not limited to the two spool gas turbine architecture described and may be used with other architectures such as a single spool axial design, a three spool axial design and other architectures.

The gas turbine engine 10 is in the form of a high bypass ratio turbofan engine mounted within a nacelle assembly 26 in which a significant amount of air pressurized by the fan section 14 bypasses the core engine for the generation of propulsion thrust. The nacelle assembly 26 partially surrounds an engine casing 31, which houses the core engine 39. The disclosed embodiment depicts a high bypass flow arrangement in which approximately 80% of the airflow entering the fan section 14 may bypass the core engine 39 via a fan bypass passage 30 which extends between the nacelle assembly 26 and the engine casing 31 for receiving and communicating a discharge airflow F1. The high bypass flow arrangement provides a significant amount of thrust for powering an aircraft.

In the disclosed embodiment, the bypass ratio (i.e., the ratio between the amount of airflow communicated through the fan bypass passage 30 relative to the amount of airflow communicated through the core engine 39 itself) is greater than 10 and the fan section 14 diameter is substantially larger than the diameter of the low pressure compressor 15. The low pressure turbine 22 has a pressure ratio that is greater than five, in one example. The engine 10 may include a gear train 23 which reduces the speed of the rotating fan section 14. The gear train 23 can be any known gear system, such as a planetary gear system with orbiting planet gears, a planetary system with non-orbiting planet gears, or other type of gear system. In the disclosed example, the gear train 23 has a constant gear ratio. It should be understood, however, that the above parameters are only exemplary of a contemplated geared turbofan engine 10, and the invention is applicable to traditional turbofan engines as well as other engine architectures.

The discharge airflow F1 is discharged from the engine 10 through a fan exhaust nozzle 33. Core exhaust gases C are discharged from the core engine 39 through a core exhaust nozzle 32 defined between the engine casing 31 and a center plug 34 disposed coaxially around a longitudinal centerline axis A of the gas turbine engine 10.

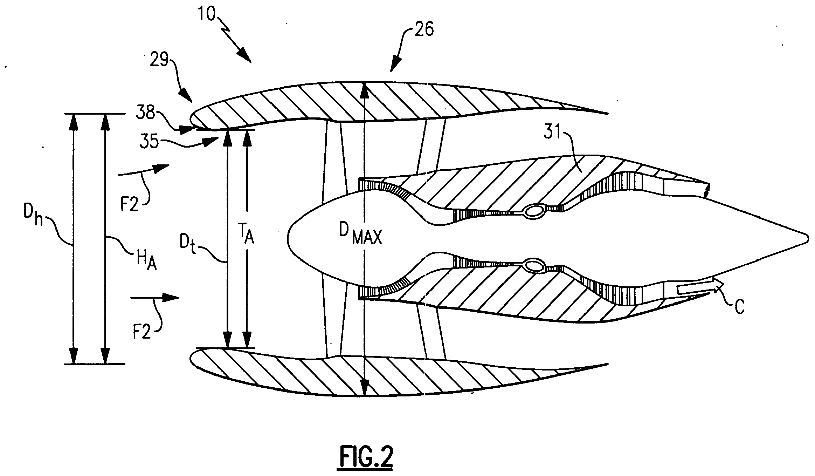

Figure 2 illustrates an example inlet lip section 38 of the nacelle assembly 26. The inlet lip section 38 is positioned near a forward section 29 of the nacelle assembly 26. A boundary layer 35 is associated with the inlet lip section 38. The boundary layer 35 represents an area adjacent to a flow surface of the inlet lip section 38 at which the velocity gradient of airflow is zero. That is, the velocity profile of oncoming airflow F2 transitions from a free stream away from surface 38 to near zero at this surface 38 due to the friction forces that occur as the oncoming airflow F2 passes over the flow surfaces of the inlet lip section 38.

The nacelle assembly 26 defines a contraction ratio. The contraction ratio represents a relative thickness of the inlet lip section 38 of the nacelle assembly 26 and is represented by the ratio of a high light area H_{A} (ring shaped area defined by a highlight diameter Dₕ) and a throat area Tₐ (ring shaped area defined by throat diameter D_{T} of the nacelle assembly 26. Current industry standards typically use a contraction ratio of approximately 1.330 to prevent the separation of the oncoming airflow F2 from the inlet lip section 38 during engine operation, but other contraction ratios may be feasible. "Thick" inlet lip section designs, which are associated with large contraction ratios, increase the maximum diameter Dₘₐₓ and increase weight and drag penalties associated with the nacelle assembly 26. In this embodiment, the ratio of Dmax to Dh is less than 1.5.

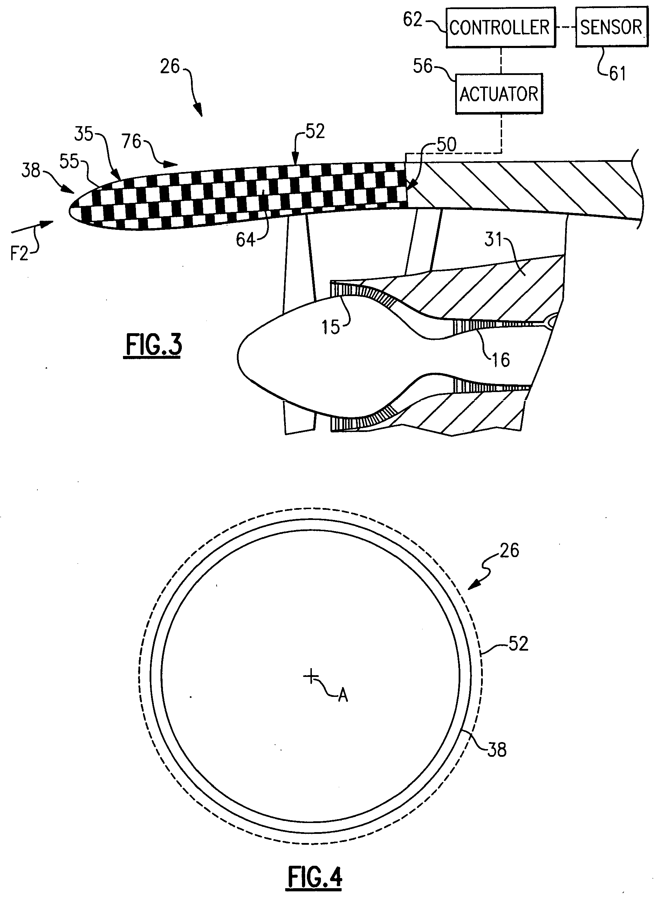

Figure 3 illustrates a cowl section 50 of the nacelle assembly 26 of the gas turbine engine 10. The cowl section 50 is downstream of the inlet lip section 38 and includes a flexible portion 52 which is selectively expanded or retracted adjacent the inlet lip section 38. The flexible portion 52 is located within an exterior wall 55 of the nacelle assembly 26. It should be understood that any portion of the cowl section 50 may include the flexible portions 52.

The flexible portion 52 transforms the cowl section 50 aft of the inlet lip tip section 38 in response to a detected operability condition. While a single flexible portion 52 of the cowl section 50 is illustrated, it should be understood that the flexible portion 52 may circumferentially extend about the entire nacelle assembly 26 such that it forms a "thick" lip function occurs around the entire circumference of the inlet lip section 38 (Figure 4). Inversely when cowl 52 is retracted inwards, if forms a "thin" lip or intermediate contour depending on flight conditions. The cowl section 50 may alternatively include a plurality of sections positioned circumferentially about the nacelle assembly 26, each section having a flexible portion 52.

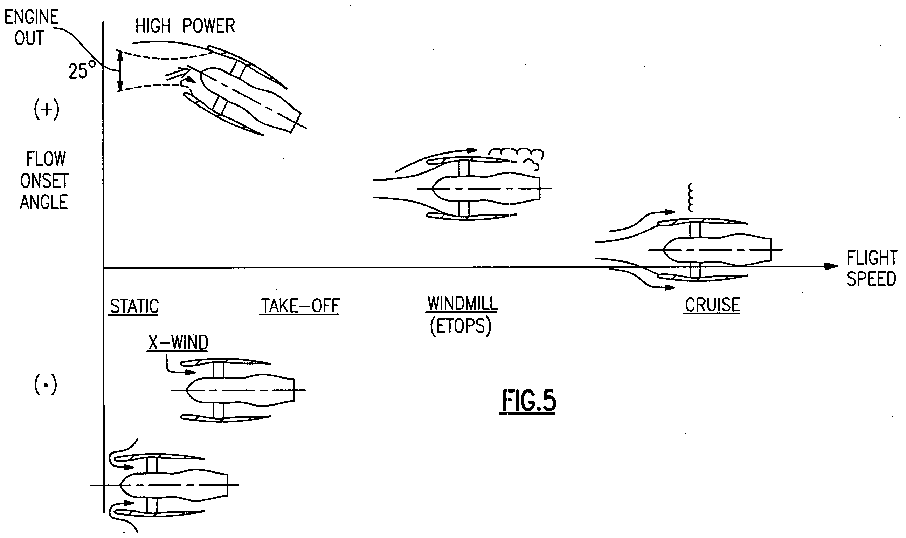

A sensor 61 detects the operability condition and communicates with a controller 62 to adjust the flexible portion 52 of the cowl section 50 into a desired shape. The actual shape of the flexible portion 52 of the cowl section 50 will vary depending upon design specific parameters including but not limited to the operability conditions experienced by the aircraft (Figure 5). It should be understood that the sensor 61 and the controller 62 may be programmable to detect any known operability condition of the aircraft. Also, the sensor 61 can be replaced by any control associated with the gas turbine engine 10 or an associated aircraft. In fact, the controller 62 itself can generate the signal to translate the flexible portion 52 of the cowl section 50.

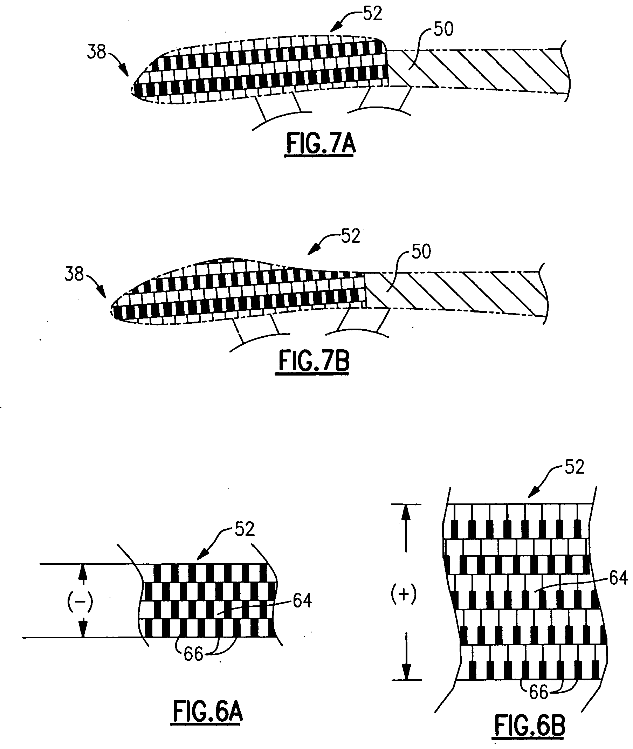

The flexible portion 52 is selectively driven by a nanoelectromechanical system 64 such as a multitude of nano-jacks 66 contained therein (Figures 6A and 6B). The multitude of nano-jacks 66 are layered within the flexible portion 52 in the disclosed embodiment to selectively expand (Figure 6B) and compress (Figure 6A) the flexible portion 52 along the entire length thereof (Figure 7A) or along sections thereof (Figure 7B) in response to extension or retraction of the multitude of nano-jacks 66. It should be understood that various nanoelectromechanical systems as well as flexible portion 52 materials may be utilized.

The airflow F2 is forced to flow around the flexible portion 52 of the cowl section 50 as required during certain operability flight conditions (see Figure 5). In one example, the operability flight condition includes a take-off condition. In another example, the operability condition includes a climb condition. In yet another example, the operability flight condition includes a crosswind condition. In still another example, the operability flight condition includes a windmilling flight condition where an engine of a multi-engine aircraft losses functionality or is otherwise shut down (i.e., an engine out condition). The damaged engine is permitted to rotate, and is driven by an airflow resulting from the forward velocity of the aircraft (i.e., the damaged engine is permitted to windmill).

By changing the nacelle surface to represent a "thick" inlet lip section 38 during specific flight conditions, the aircraft may be designed having a thin inlet lip section 38 (i.e., a slim line nacelle having a reduced contraction ratio such that efficiency is improved during cruise operations. By specifically tailoring the effective boundary layer 35 thickness for each operability flight condition, overall performance of the gas turbine engine 10 is improved. A reduced maximum diameter of the nacelle assembly 26 may therefore be achieved while reducing weight, reducing fuel burn and increasing the overall efficiency of the gas turbine engine 10. The flexible portion 52 in the disclosed embodiment need only provide a maximum diameter increase of approximately 20% reducing aircraft drag and weight to provide mission fuel burn rate decrease of approximately 2%-5%.

It should be understood that relative positional terms such as "forward," "aft," "upper," "lower," "above," "below," and the like are with reference to the normal operational attitude of the vehicle and should not be considered otherwise limiting.

It should be understood that although a particular component arrangement is disclosed in the illustrated embodiment, other arrangements will benefit from the instant invention.

Although particular step sequences are shown, described, and claimed, it should be understood that steps may be performed in any order, separated or combined unless otherwise indicated and will still benefit from the present invention.

The foregoing description is exemplary rather than defined by the limitations within. Many modifications and variations of the present invention are possible in light of the above teachings. The disclosed embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A nacelle assembly (26), comprising:
an inlet lip section (38) having a highlight diameter Dh; and
a cowl section (50) downstream of said inlet lip section (38), and having a maximum diameter Dmax, at least a portion of said cowl section (50) including a flexible portion (52) located within an exterior wall (55) of the nacelle assembly (26);
**characterised in that**:
said nacelle assembly further comprises a nanoelectromechanical system (64) configured to adjust said flexible portion (52) to change a thickness contour of the nacelle assembly (26) by reducing or increasing the maximum diameter Dmax for varying a ratio of maximum diameter Dmax to highlight diameter Dh in response to an operability flight condition.

2. The assembly (26) as recited in claim 1, wherein an exterior surface of said flexible portion (52) is flush with an exterior surface of said nacelle assembly (26) in a first position.

3. The assembly (26) as recited in claim 2, wherein said flexible portion extends circumferentially about the entire nacelle assembly (26).

4. The assembly (26) as recited in any of claims 1 to 3, wherein said cowl section (50) is a fan nacelle.

5. The assembly (26) as recited in any preceding claim, wherein said flexible portion (52) is inclusive of said inlet lip section (38).

6. The assembly (26) as recited in any preceding claim, wherein said nanoelectromechanical system (64) is configured to adjust said flexible portion (52) in segments.

7. A gas turbine engine (10), comprising:
at least one compressor section (15, 16), at least one combustor section (18) and at least one turbine section (20, 22);
a nacelle assembly (26) as claimed in any preceding claim, wherein said nacelle assembly (26) at least partially surrounds said at least one compressor section (15, 16), said at least one combustor section (18) and said at least one turbine section (20, 22), and said nanoelectromechanical system (64) includes a multitude of nanoelectromechanical layers; and
a controller (62) that identifies an operability flight condition, said controller (62) operable to control said flexible portion (52) in response to said operability flight condition.

8. The gas turbine engine (10) as recited in claim 7, comprising a sensor (61) that produces a signal representing said operability flight condition and communicates said signal to said controller (62).

9. The gas turbine engine (10) as recited in claim 7 or 8, wherein said controller (62) communicates with said nanoelectromechanical system (64).

10. The gas turbine engine (10) as recited in claim 7, 8 or 9 or assembly (26) as recited in any of claims 1 to 6, wherein said nanoelectromechanical system (64) includes a multitude of radial layers of nano-jacks (66).

11. The gas turbine engine (10) or assembly (26) as recited in claim 10, wherein each of said multitude of layers include a multitude of nano-jacks (66).

12. The gas turbine engine (10) as recited in any of claims 7 to 11 or assembly (26) as recited in any of 1 to 6, 10 or 11, wherein said nanoelectromechanical system (64) is configured to adjust said flexible portion (52) to change the thickness contour of the nacelle assembly (26) between a thick lip contour and a thin lip contour.

13. A method of increasing an effective boundary layer thickness of an inlet lip section (38) of a nacelle (26) of a gas turbine engine (10), the lip section (38) having a highlight diameter Dh, comprising:
sensing an operability flight condition; and
providing a flexible portion (52) which is included in a cowl section (50) of the nacelle (26) downstream of said inlet lip section and located within an exterior wall of the nacelle assembly, the cowl section (50) having a maximum diameter Dmax; **characterised in that**:
said method further comprises selectively flexing the flexible portion (52) of the nacelle (26) through a multitude of nanoelectromechanical layers to selectively adjust a thickness contour by reducing or increasing the maximum diameter Dmax for varying a ratio of maximum diameter Dmax to highlight diameter Dh in response to the operability flight condition.

14. The method as recited in claim 13, further comprising extending a multitude of nano-jacks (66) within at least one of the multitude of nanoelectromechanical layers.

15. The method as recited in claim 14, further comprising extending a multitude of nano-jacks (66) within a segment of at least one of the multitude of nanoelectromechanical layers.

## Patentansprüche

1. Gondelanordnung (26), umfassend:
einen Einlassrandabschnitt (38), der einen hervorgehobenen Durchmesser Dh aufweist; und
einen Kappenabschnitt (50) stromabwärts des Einlassrandabschnittes (38), und einen maximalen Durchmesser Dmax aufweisend, wobei zumindest ein Teil des Kappenabschnittes (50) einen flexiblen Teil (52) beinhaltet, der sich innerhalb einer Außenwand (55) der Gondelanordnung (26) befindet;
**dadurch gekennzeichnet, dass**:
die Gondelanordnung ferner ein nanoelektromechanisches System (64) umfasst, das konfiguriert ist, um den flexiblen Teil (52) einzustellen, um eine Dickenkontur der Gondelanordnung (26) zu verändern, indem der maximale Durchmesser Dmax reduziert oder erhöht wird, um ein Verhältnis von maximalem Durchmesser Dmax zu hervorgehobenem Durchmesser Dh als Reaktion auf eine Funktionsfähigkeitsflugbedingung zu variieren.

2. Anordnung (26) nach Anspruch 1, wobei eine Außenfläche des flexiblen Teils (52) bündig mit einer Außenfläche der Gondelanordnung (26) in einer ersten Position ist.

3. Anordnung (26) nach Anspruch 2, wobei sich der flexible Teil umlaufend um die gesamte Gondelanordnung (26) erstreckt.

4. Anordnung (26) nach einem der Ansprüche 1 bis 3, wobei der Kappenabschnitt (50) eine Gebläsegondel ist.

5. Anordnung (26) nach einem vorhergehenden Anspruch, wobei der flexible Teil (52) einschließlich des Einlassrandabschnittes (38) ist.

6. Anordnung (26) nach einem vorhergehenden Anspruch, wobei das nanoelektromechanische System (64) konfiguriert ist, um den flexiblen Teil (52) in Segmenten einzustellen.

7. Gasturbinentriebwerk (10), umfassend:
zumindest einen Verdichterabschnitt (15, 16), zumindest einen Brennkammerabschnitt (18) und zumindest einen Turbinenabschnitt (20, 22);
eine Gondelanordnung (26) nach einem vorhergehenden Anspruch, wobei die Gondelanordnung (26) den zumindest einen Verdichterabschnitt (15, 16), den zumindest einen Brennkammerabschnitt (18) und den zumindest einen Turbinenabschnitt (20, 22) zumindest teilweise umgibt und das nanoelektromechanische System (64) eine Vielzahl von nanoelektromechanischen Schichten beinhaltet; und
eine Steuerung (62), die eine Funktionsfähigkeitsflugbedingung identifiziert, wobei die Steuerung (62) bedienbar ist, um den flexiblen Teil (52) als Reaktion auf die Funktionsfähigkeitsflugbedingung zu steuern.

8. Gasturbinentriebwerk (10) nach Anspruch 7, umfassend einen Sensor (61), der ein Signal erzeugt, das die Funktionsfähigkeitsflugbedingung darstellt und das Signal an die Steuerung (62) kommuniziert.

9. Gasturbinentriebwerk (10) nach Anspruch 7 oder 8, wobei die Steuerung (62) mit dem nanoelektromechanischen System (64) kommuniziert.

10. Gasturbinentriebwerk (10) nach Anspruch 7, 8 oder 9 oder Anordnung (26) nach einem der Ansprüche 1 bis 6, wobei das nanoelektromechanische System (64) eine Vielzahl von radialen Schichten an Nanobuchsen (66) beinhaltet.

11. Gasturbinentriebwerk (10) oder Anordnung (26) nach Anspruch 10, wobei jede aus der Vielzahl von Schichten eine Vielzahl von Nanobuchsen (66) beinhaltet.

12. Gasturbinentriebwerk (10) nach einem der Ansprüche 7 bis 11 oder Anordnung (26) nach einem der Ansprüche 1 bis 6, 10 oder 11, wobei das nanoelektromechanische System (64) konfiguriert ist, um den flexiblen Teil (52) einzustellen, um die Dickenkontur der Gondelanordnung (26) zwischen einer dicken Randkontur und einer dünnen Randkontur zu verändern.

13. Verfahren zum Erhöhen einer effektiven Begrenzungsschichtdicke eines Einlassrandabschnittes (38) einer Gondel (26) eines Gasturbinentriebwerks (10), wobei der Randabschnitt (38) einen hervorgehobenen Durchmesser Dh aufweist, umfassend:
Erfassen einer Funktionsfähigkeitsflugbedingung; und
Bereitstellen eines flexiblen Teils (52), der in einem Kappenabschnitt (50) der Gondel (26) stromabwärts des Einlassrandabschnittes enthalten ist und sich innerhalb einer Außenwand der Gondelanordnung befindet, wobei der Kappenabschnitt (50) einen maximalen Durchmesser Dmax aufweist;
**dadurch gekennzeichnet, dass**:
das Verfahren ferner das selektive Biegen des flexiblen Teils (52) der Gondel (26) durch eine Vielzahl von nanoelektromechanischen Schichten umfasst, um eine Dickenkontur selektiv einzustellen, indem der maximale Durchmesser Dmax reduziert oder erhöht wird, um ein Verhältnis von maximalem Durchmesser Dmax zu hervorgehobenem Durchmesser Dh als Reaktion auf die Funktionsfähigkeitsflugbedingung zu variieren.

14. Verfahren nach Anspruch 13, ferner umfassend das Erweitern einer Vielzahl von Nanobuchsen (66) innerhalb von zumindest einer aus der Vielzahl von nanoelektromechanischen Schichten.

15. Verfahren nach Anspruch 14, ferner umfassend das Erweitern einer Vielzahl von Nanobuchsen (66) innerhalb eines Segments von zumindest einer aus der Vielzahl von nanoelektromechanischen Schichten.

## Revendications

1. Ensemble nacelle (26), comprenant :
une section de lèvre d'entrée d'air (38) ayant un diamètre de point culminant Dh ; et
une section de capot (50) en aval de ladite section de lèvre d'entrée d'air (38), et ayant un diamètre maximal Dmax, au moins une partie de ladite section de capot (50) incluant une partie flexible (52) située à l'intérieur d'une paroi extérieure (55) de l'ensemble nacelle (26) ;
**caractérisé en ce que** :
ledit ensemble nacelle comprend en outre un système nanoélectromécanique (64) configuré pour ajuster ladite partie flexible (52) pour modifier un profil d'épaisseur de l'ensemble nacelle (26) en réduisant ou en augmentant le diamètre maximal Dmax pour faire varier un rapport entre un diamètre maximal Dmax et un diamètre de point culminant Dh en réponse à une condition d'aptitude opérationnelle au vol.

2. Ensemble (26) selon la revendication 1, dans lequel une surface extérieure de ladite partie flexible (52) est au même niveau qu'une surface extérieure dudit ensemble nacelle (26) dans une première position.

3. Ensemble (26) selon la revendication 2, dans lequel ladite partie flexible s'étend circonférentiellement autour de tout l'ensemble nacelle (26).

4. Ensemble (26) selon l'une quelconque des revendications 1 à 3, dans lequel ladite section de capot (50) est une nacelle de soufflante.

5. Ensemble (26) selon l'une quelconque des revendications précédentes, dans lequel ladite partie flexible (52) englobe ladite section de lèvre d'entrée d'air (38).

6. Ensemble (26) selon l'une quelconque des revendications précédentes, dans lequel ledit système nanoélectromécanique (64) est configuré pour ajuster ladite partie flexible (52) par segments.

7. Turbine à gaz (10), comprenant :
au moins une section de compresseur (15, 16), au moins une section de chambre de combustion (18) et au moins une section de turbine (20, 22) ;
un ensemble nacelle (26) selon l'une quelconque des revendications précédentes, dans lequel ledit ensemble nacelle (26) entoure au moins partiellement ladite au moins une section de compresseur (15, 16), ladite au moins une section de chambre de combustion (18) et ladite au moins une section de turbine (20, 22), et ledit système nanoélectromécanique (64) inclut une multitude de couches nanoélectromécaniques ; et
un dispositif de commande (62) qui identifie une condition d'aptitude opérationnelle au vol, ledit dispositif de commande (62) peut fonctionner pour commander ladite partie flexible (52) en réponse à ladite condition d'aptitude opérationnelle au vol.

8. Turbine à gaz (10) selon la revendication 7, comprenant un capteur (61) qui produit un signal représentant ladite condition d'aptitude opérationnelle au vol et communique ledit signal audit dispositif de commande (62).

9. Turbine à gaz (10) selon la revendication 7 ou 8, dans lequel ledit dispositif de commande (62) communique avec ledit système nanoélectromécanique (64).

10. Turbine à gaz (10) selon la revendication 7, 8 ou 9 ou ensemble (26) selon l'une quelconque des revendications 1 à 6, dans lequel ledit système nanoélectromécanique (64) inclut une multitude de couches radiales de nano-vérins (66).

11. Turbine à gaz (10) ou ensemble (26) selon la revendication 10, dans lequel chacune de ladite multitude de couches inclut une multitude de nano-vérins (66).

12. Turbine à gaz (10) selon l'une quelconque des revendications 7 à 11 ou ensemble (26) selon l'une quelconque des revendications 1 à 6, 10 ou 11, dans lequel ledit système nanoélectromécanique (64) est configuré pour ajuster ladite partie flexible (52) pour modifier le profil d'épaisseur de l'ensemble nacelle (26) entre un profil de lèvre épaisse et un profil de lèvre fine.

13. Procédé d'augmentation d'une épaisseur de couche limite effective d'une section de lèvre d'entrée d'air (38) d'une nacelle (26) d'une turbine à gaz (10), la section de lèvre (38) ayant un diamètre de point culminant Dh, comprenant :
la détection d'une condition d'aptitude opérationnelle au vol ; et
la fourniture d'une partie flexible (52) qui est incluse dans une section de capot (50) de la nacelle (26) en aval de ladite section de lèvre d'entrée d'air et située à l'intérieur d'une paroi extérieure de l'ensemble nacelle, la section de capot (50) ayant un diamètre maximal Dmax ;
**caractérisé en ce que** :
ledit procédé comprend en outre le fléchissement sélectif de la partie flexible (52) de la nacelle (26) à travers une multitude de couches nanoélectromécaniques pour ajuster sélectivement un profil d'épaisseur en réduisant ou en augmentant le diamètre maximal Dmax pour faire varier un rapport entre le diamètre maximal Dmax et le diamètre culminant Dh en réponse à la condition d'aptitude opérationnelle au vol.

14. Procédé selon la revendication 13, comprenant en outre l'extension d'une multitude de nano-vérins (66) à l'intérieur d'au moins l'une de la multitude de couches nanoélectromécaniques.

15. Procédé selon la revendication 14, comprenant en outre l'extension d'une multitude de nano-vérins (66) à l'intérieur d'un segment d'au moins l'une de la multitude de couches nanoélectromécaniques.
